(19) **Europäisches Patentamt**

**European Patent Office**

**Office européen des brevets**

(11) **EP 0 875 521 A1**

(12) **EUROPEAN PATENT APPLICATION**

(43) Date of publication:
04.11.1998 Bulletin 1998/45

(51) Int. Cl.$^6$: **C08G 83/00**, C11D 3/00

(21) Application number: 97302964.8

(22) Date of filing: 30.04.1997

(84) Designated Contracting States:
AT BE CH DE DK ES FI FR GB GR IE IT LI LU MC NL PT SE

(71) Applicant: **UNILEVER PLC**
**London EC4P 4BQ (GB)**

(72) Inventors:
- **Dixon, Sarah**
  **Bebington, Wirral, Merseyside, L63 3JW (GB)**
- **Khoshdel, Ezat**
  **Bebington, Wirral, Merseyside, L63 3JW (GB)**
- **Warr, Jonathan Frank**
  **Bebington, Wirral, Merseyside, L63 3JW (GB)**
- **Webb, Nicholas**
  **Bebington, Wirral, Merseyside, L63 3JW (GB)**

(74) Representative:
**Mole, Peter Geoffrey et al**
**UNILEVER PLC**
**Patent Division**
**Colworth House**
**Sharnbrook**
**Bedford MK44 1LQ (GB)**

(54) **A detergent composition**

(57) A hyperbranched polymer partially or fully functionalised with dye binding ligands or combination of ligands.

EP 0 875 521 A1

## Description

### Technical Field

The present invention relates to novel polymers and their use in detergent compositions to inhibit dye transfer between fabrics during washing.

### Background of the Invention

There is a tendency during the laundering of fabrics for coloured fabrics to release dye into the wash solution. This is a most persistent and troublesome problem as this released dye can then be transferred onto other fabrics. A fabric treatment composition comprising an agent which could prevent the transfer of dye would therefore prove useful.

EP 462 806 (Unilever) discloses a domestic treatment of a fabric with a cationic dye fixing agent to reduce the amount of dye released from the fabric. Suitable cationic dye fixing agents include the dimethyldiallyl ammonium chloride polymer.

Surfactant containing dye transfer inhibiting compositions are disclosed in EP 0 587 550 EP 0 635 566 and EP 0 635 565, EP 0 327 927 (All Procter and Gamble).

Dendritic polymers have been described for applications such as crosslinking agents, drug delivery systems, optoelectronics, carriers of enzymes and catalysts, Newkome *et al*, J Org Chem, 1985, **50**, 2003, Roy *et al*, J Chem Soc Chem Commun, 1993, 1869.

Co-pending British Application number 9525773.9 discloses detergent compositions comprising dentritic molecules. The present application has invented new polymeric materials that prevent dye transfer between fabrics during the laundry process.

### Definition of the Invention

Accordingly the present application relates to a hyperbranched polymer partially or fully functionalised with dye binding ligands or combination of dye binding ligands.

The invention also describes the use of these polymers to mitigate dye transfer

### Detailed Description of the Invention

It is preferred if the hyperbranched polymer is dentritic in nature. Basically a dendritic molecule is a highly branched polymer molecule. A fundamental difference between dendritic and linear polymers is the nature of bonding and branching sequences. Dendritic macromolecules contain a large number of symmetrically arranged branches which results in a three-dimensional shape. Their shape is relatively fixed in marked contrast to linear polymers which are random coils and, depending on the medium, may vary in shape and size from extended chains to compact coils.

Dendritic macromolecules can be generated in two basic structural types. The first type known as "starburst" polymers and are disclosed in US 4,507,466, US 4,558, 120 and US 4 857 599. Starburst polymers have globular structures in which well-defined branches radiate from a central core, becoming more branched and crowded as they extend out to the periphery. The second type of dendritic macromolecule are called hyperbranched polymers and are obtained by controlled polymerisation of $AB_2$ type ligands. Examples of such hyperbranched polymers suitable for combination with dye binding ligands are disclosed in Webster *et al*, J Am Chem Soc, 1990, *112*, 4592; Macromolecules, 1992, 25, 5561; Frechet, et al, J Am Chem Soc, 1990, *113*, 4583. Hyperbranched polymers have a fractal pattern of chemical bonds, but their branches don't emanate from a central core. Hyperbranched polymers in reality are imperfect dendrimers and can have somewhat random or fairly regular architectures. Both starburst polymers and hyperbranched polymers are suitable for use with the present invention.

All generations of dendritic polymers from a 1st generation to a 5th or greater generation dendritic polymer are suitable for use within the present invention. However it is preferable if the dendrimer is 3rd, 4th or 5th generation.

In addition to full dendrimers, all generations of dendritic fragments such as a wedge, a half and three quarter dendrons also for use with the present invention. Wedges or fragments are attached to a polyfunctional core through focal points. The term focal point of a dendritic molecule is used to refer to the geometric location or point towards which all of the branches converge. Since a dendritic molecule is a three-dimensional "tree-like" structure by definition, the focal point is like the base of the trunk of a very regular tree, where all the branches and roots converge.

The dendritic polymers of the invention can have various branches and shapes including "Kites", "knots", "barbells". The "barbel" shaped macromolecules generally have dendritic fragments at either end of the molecule, which fragments are connected together at the focal point of each dendrimer by a suitable substituent such as a short or long linear polymer chain or the like.

The dendritic polymers according to the invention can be produced by a variety of methods including conventional polymerisation techniques such as polycondensation, radical polymerisation and Ring Opening Metathesis Polymerisation (ROMP). Depending on the type and functionality, these macromolecules can be produced by any common methodologies such as in bulk, solution, emulsion or suspension polymerisations. It is preferable the dye binding ligand is then attached to basic dendrimer structure.

Examples of commercial dendrimers which can be functionalised include those of "Starburst" type supplied by "Dendritic" Company, DAB(PA)$_n$ supplied by DSM. and "Polyol" Dendrimers developed by Perstorp Company.

Other multi-functional molecules such as glycerol, pentaerythritol, dipentaerythritol, various types of cyclodextrins, polyamines such as polyethyleneimine can also be functionalised with suitable dye binding ligands to give strong anti-dye transfer agents.

In the context of the present invention a dye binding ligand is defined as a ligand which if incorprated into a polymer (mwt 40,000-100,000) binds dye in water at pH 5 to 12 at a temperature from 5°C to 80°C, preferably at a temperature of 20°C. However, with this proviso the dye binding homopolymer can bind dye under other conditions.

Any dye binding ligand is suitable for use with the present invention, however it is preferred if the dye binding ligand comprises a nitrogen containing heterocycle.

Preferred dye binding ligands include vinyl azlactone, vinyl azlactam, more preferred polymers include pyrrolidone , imidazole , pyridine, pyridine-N-oxide , oxazolidone, nicotinic acid N-oxide and pyroglutamate. Especially preferred is pyroglutamate.

The dye binding ligands are preferably attached to the dendrimer or hyperbranched macromolecule via a chemical bond, preferred chemical bonds include C-C, ether bond (C-O-), ketone C=O, ester [C(O)=O], amide linkage [C(NR)=O] and urethane [-O-C(NR)=O].

To present the best anti-dye transfer effect it is preferred if the dye binding ligands are located on the periphery.

It is preferred if the degree of substitution by dye binding polymer of the free end groups of the polymer is from 2 to 100%, more preferably from 10 to 80% most preferably from 20 to 70%.

It may be desirable to include additional ligands other than the dye binding polymer into the polymer. Examples of these additional ligands include vinyl alcohol, vinyl acetate, polyethylene glycol (PEG), vinyl styrene, acrylamide, acrylic acid, methyl methacrylate, hydroxyethyl acrylate/methacrylate, IEG acrylate/ methacrylate, glycidyl acrylate/methacrylate. The addition of these third ligands can cause changes in the properties of these polymers such as solubility, compatibility with liquid products and redeposition performance or sequestration ability.

Additional ligands may also be present for cost minimalisation, as a cross-linking moiety or to impart biodegradability.

It is preferred if the polymer has an average molecular weight range from 2,000 to 200,000 more preferably from 5,000 to 100,000, most preferably from 5,000 to 70,000.

It is preferable if the hyperbranched polymer of the invention are incorporated into a detergent composition. However, in addition to the laundry detergents, we also envisage the utility of these new dendritic anti-dye transfer polymers in textile industry for removing un-reacted dyes from the dye bath or waste waters.

## Detergent Active Compounds

The detergent compositions of the invention may contain, a detergent-active compounds (surfactants) which may be chosen from soap and non-soap anionic, cationic, nonionic, amphoteric and zwitterionic detergent-active compounds, and mixtures thereof. Many suitable detergent-active compounds are available and are fully described in the literature, for example, in "Surface-Active Agents and Detergents", Volumes I and II, by Schwartz, Perry and Berch.

The preferred detergent-active compounds that can be used are soaps and synthetic non-soap anionic and nonionic compounds.

The compositions of the invention preferably contain nonionic surfactant as the preferred surfactant.

Nonionic surfactants that may be used include the primary and secondary alcohol ethoxylates, especially the $C_8$-$C_{20}$ aliphatic alcohols ethoxylated with an average of from 1 to 20 moles of ethylene oxide per mole of alcohol, and more especially the $C_{10}$-$C_{15}$ primary and secondary aliphatic alcohols ethoxylated with an average of from 1 to 10 moles of ethylene oxide per mole of alcohol. Non-ethoxylated nonionic surfactants include alkylpolyglycosides, glycerol monoethers, and polyhydroxyamides (glucamide).

It is preferred if the level of nonionic surfactant is from 0 wt% to 30 wt%, preferably from 1 wt% to 25 wt%, most preferably from 2 wt% to 15 wt%.

If present it is preferred if the level of alkylbenzene sulphonate is from 0 wt% to 30 wt%, more preferably 1 wt% to 25 wt%, most preferably from 2 wt% to 15 wt%.

The detergent compositions of the invention may contain other anionic surfactants in amounts additional to the percentages quoted above. Suitable anionic surfactants are well-known to those skilled in the art. Examples include primary and secondary alkyl sulphates, particularly $C_8$-$C_{15}$ primary alkyl sulphates; alkyl ether sulphates; olefin sulphonates; alkyl xylene sulphonates; dialkyl sulphosuccinates; and fatty acid ester sulphonates. Sodium salts are generally preferred.

The choice of detergent-active compound (surfactant), and the amount present, will depend on the intended use of the detergent composition. In fabric washing compositions, different surfactant systems may be chosen, as is well known to the skilled formulator, for handwashing products and for products intended for use in different types of washing machine.

The total amount of surfactant present will also depend on the intended end use and may be as high as 60 wt%, for example, in a composition for washing fabrics by hand. In compositions for machine washing of fabrics, an amount of from 5 to 40 wt% is generally appropriate.

Detergent compositions suitable for use in most automatic fabric washing machines generally contain anionic non-soap surfactant, or nonionic surfactant, or combinations of the two in any ratio, optionally together with soap.

Detergency Builders

The detergent compositions of the invention will generally also contain one or more detergency builders. The total amount of detergency builder in the compositions will suitably range from 5 to 80 wt%, preferably from 10 to 60 wt%.

Inorganic builders that may be present include sodium carbonate, if desired in combination with a crystallisation seed for calcium carbonate, as disclosed in GB 1 437 950 (Unilever); crystalline and amorphous aluminosilicates, for example, zeolites as disclosed in GB 1 473 201 (Henkel), amorphous aluminosilicates as disclosed in GB 1 473 202 (Henkel) and mixed crystalline/amorphous aluminosilicates as disclosed in GB 1 470 250 (Procter & Gamble); and layered silicates as disclosed in EP 164 514B (Hoechst). Inorganic phosphate builders, for example, sodium orthophosphate, pyrophosphate and tripolyphosphate are also suitable for use with this invention.

The detergent compositions of the invention preferably contain an alkali metal, preferably sodium, aluminosilicate builder. Sodium aluminosilicates may generally be incorporated in amounts of from 10 to 70% by weight (anhydrous basis), preferably from 25 to 50 wt%.

The alkali metal aluminosilicate may be either crystalline or amorphous or mixtures thereof, having the general formula:

$$0.8\text{-}1.5 \ Na_2O. \ Al_2O_3. \ 0.8\text{-}6 \ SiO_2$$

These materials contain some bound water and are required to have a calcium ion exchange capacity of at least 50 mg CaO/g. The preferred sodium aluminosilicates contain 1.5-3.5 $SiO_2$ units (in the formula above). Both the amorphous and the crystalline materials can be prepared readily by reaction between sodium silicate and sodium aluminate, as amply described in the literature.

Suitable crystalline sodium aluminosilicate ion-exchange detergency builders are described, for example, in GB 1 429 143 (Procter & Gamble). The preferred sodium aluminosilicates of this type are the well-known commercially available zeolites A and X, and mixtures thereof.

The zeolite may be the commercially available zeolite 4A now widely used in laundry detergent powders. However, according to a preferred embodiment of the invention, the zeolite builder incorporated in the compositions of the invention is maximum aluminium zeolite P (zeolite MAP) as described and claimed in EP 384 070A (Unilever). Zeolite MAP is defined as an alkali metal aluminosilicate of the zeolite P type having a silicon to aluminium ratio not exceeding 1.33, preferably within the range of from 0.90 to 1.33, and more preferably within the range of from 0.90 to 1.20.

Especially preferred is zeolite MAP having a silicon to aluminium ratio not exceeding 1.07, more preferably about 1.00. The calcium binding capacity of zeolite MAP is generally at least 150 mg CaO per g of anhydrous material.

Organic builders that may be present include polycarboxylate polymers such as polyacrylates, acrylic/maleic copolymers, and acrylic phosphinates; ligandic polycarboxylates such as citrates, gluconates, oxydisuccinates, glycerol mono-, di- and trisuccinates, carboxymethyloxysuccinates, carboxymethyloxymalonates, dipicolinates, hydroxyethyliminodiacetates, alkyl- and alkenylmalonates and succinates; and sulphonated fatty acid salts. This list is not intended to be exhaustive.

Especially preferred organic builders are citrates, suitably used in amounts of from 5 to 30 wt%, preferably from 10 to 25 wt%; and acrylic polymers, more especially acrylic/maleic copolymers, suitably used in amounts of from 0.5 to 15 wt%, preferably from 1 to 10 wt%.

Builders, both inorganic and organic, are preferably present in alkali metal salt, especially sodium salt, form.

Bleach Components

Detergent compositions according to the invention may also suitably contain a bleach system. Fabric washing compositions may desirably contain peroxy bleach compounds, for example, inorganic persalts or organic peroxyacids,

4

capable of yielding hydrogen peroxide in aqueous solution.

Suitable peroxy bleach compounds include organic peroxides such as urea peroxide, and inorganic persalts such as the alkali metal perborates, percarbonates, perphosphates, persilicates and persulphates. Preferred inorganic persalts are sodium perborate monohydrate and tetrahydrate, and sodium percarbonate.

Especially preferred is sodium percarbonate having a protective coating against destabilisation by moisture. Sodium percarbonate having a protective coating comprising sodium metaborate and sodium silicate is disclosed in GB 2 123 044B (Kao).

The peroxy bleach compound is suitably present in an amount of from 0.1 to 35 wt%, preferably from 0.5 to 25 wt%.

The peroxy bleach compound may be used in conjunction with a bleach activator (bleach precursor) to improve bleaching action at low wash temperatures. The bleach precursor is suitably present in an amount of from 0.1 to 8 wt%, preferably from 0.5 to 5 wt%.

Preferred bleach precursors are peroxycarboxylic acid precursors, more especially peracetic acid precursors and pernoanoic acid precursors. Especially preferred bleach precursors suitable for use in the present invention are N,N,N',N'-tetracetyl ethylenediamine (TAED) and sodium noanoyloxybenzene sulphonate (SNOBS). The novel quaternary ammonium and phosphonium bleach precursors disclosed in US 4 751 015 and US 4 818 426 (Lever Brothers Company) and EP 402 971A(Unilever), and the cationic bleach precursors disclosed in EP 284 292A and EP 303 520A (Kao) are also of interest.

The bleach system can be either supplemented with or replaced by a peroxyacid. Examples of such peracids can be found in US 4 686 063 and US 5 397 501 (patent on TPCAP - Unilever). A preferred example is the imido peroxycarboxylic class of peracids described in EP A 325 288, EP A 349 940, DE 382 3172 and EP 325 289. A particularly preferred example is phtalimido peroxy caproic acid (PAP). Such peracids are suitably present at 0.1 - 12%, preferably 0.5 - 10%.

A bleach stabiliser (heavy metal sequestrant) may also be present. Suitable bleach stabilisers include ethylenediamine tetraacetate (EDTA), the polyphosphonates such as Dequest (Trade Mark) and non-phosphate stabilisers such as EDDS (ethylene diamine di-succinic acid). These Bleach stabilisers are also useful for stain removal, especially in products containing low levels of bleaching species or no bleaching species.

An especially preferred bleach system comprises a peroxy bleach compound (preferably sodium percarbonate optionally together with a bleach activator), and a transition metal bleach catalyst as described and claimed in EP 458 397A, EP 458 398A and EP 509 787A (Unilever).

The Enzyme

Suitable enzymes include the proteases, amylases, cellulases, oxidases, peroxidases and lipases usable for incorporation in detergent compositions.

Preferred proteolytic enzymes (proteases) are, catalytically active protein materials which degrade or alter protein types of stains when present as in fabric stains in a hydrolysis reaction. They may be of any suitable origin, such as vegetable, animal, bacterial or yeast origin.

Proteolytic enzymes or proteases of various qualities and origins and having activity in various pH ranges of from 4-12 are available and can be used in the instant invention. Examples of suitable proteolytic enzymes are the subtilisins, which are obtained from particular strains of B. subtilis and B. licheniformis, such as the commercially available subtilisins Maxatase (Trade Mark), as supplied by Gist-Brocades N.V., Delft, Holland, and Alcalase (Trade Mark), as supplied by Novo Industri A/S, Copenhagen, Denmark.

Particularly suitable is a protease obtained from a strain of Bacillus having maximum activity throughout the pH range of 8-12, being commercially available, e.g. from Novo Industri A/S under the registered trade-names Esperase (Trade Mark) and Savinase (Trade-Mark). The preparation of these and analogous enzymes is described in GB 1 243 785. Other commercial proteases are Kazusase (Trade Mark) (obtainable from Showa-Denko of Japan), Optimase (Trade Mark) (from Miles Kali-Chemie, Hannover, West Germany), and Superase (Trade Mark) (obtainable from Pfizer of U.S.A.).

Detergency enzymes are commonly employed in granular form in amounts of from about 0.1 to about 3.0 wt%.

Other ingredients

The compositions of the invention may contain alkali metal, preferably sodium, carbonate, in order to increase detergency and ease processing. Sodium carbonate may suitably be present in amounts ranging from 1 to 60 wt%, preferably from 2 to 40 wt%. However, compositions containing little or no sodium carbonate are also within the scope of the invention.

Powder flow may be improved by the incorporation of a small amount of a powder structurant, for example, a fatty acid (or fatty acid soap), a sugar, an acrylate or acrylate/maleate polymer, or sodium silicate.

One preferred powder structurant is fatty acid soap, suitably present in an amount of from 1 to 5 wt%.

Other materials that may be present in detergent compositions of the invention include sodium silicate; antiredeposition agents such as cellulosic polymers; inorganic salts such as sodium sulphate; lather control agents or lather boosters as appropriate; proteolytic and lipolytic enzymes; dyes; coloured speckles; perfumes; foam controllers; fabric softening compounds, fluorescers and decoupling polymers. This list is not intended to be exhaustive.

It is advantageous if soil release polymers are present as they enhance the dye transfer inhibition. Particularly preferred are soil release polymers based disclosed in WO 95/32997 A (Rhone Poulenc)), EP 219 048 (BASF), GB 2 208 515 (Colgate), EP 253 567 (P&G)

The detergent composition when diluted in the wash liquor (during a typical wash cycle) will give a pH of the wash liquor from 7 to 10.5.

The detergent components of the present invention may be incorporated in detergent compositions of all physical types, for example, powders, liquids, gels and solid bars.

Detergent compositions of the invention may be prepared by any suitable method.

Particulate detergent compositions are suitably prepared by spray-drying a slurry of compatible heat-insensitive ingredients, and then spraying on or postdosing those ingredients unsuitable for processing via the slurry. The skilled detergent formulator will have no difficulty in deciding which ingredients should be included in the slurry and which should not.

Particulate detergent compositions of the invention preferably have a bulk density of at least 400 g/l, more preferably at least 500 g/l.

Especially preferred compositions have bulk densities of at least 650 g/litre, more preferably at least 700 g/litre.

Such powders may be prepared either by post-tower densification of spray-dried powder, or by wholly non-tower methods such as dry mixing and granulation; in both cases a high-speed mixer/granulator may advantageously be used.

Processes using high-speed mixer/granulators are disclosed, for example, in EP 340 013A, EP 367 339A, EP 390 251A and EP 420 317A (Unilever).

Liquid detergent compositions can be prepared by admixing the essential and optional ingredients thereof in any desired order to provide compositions containing components in the requisite concentrations. Liquid compositions according to the present invention can also be in compact form which means it will contain a lower level of water compared to a conventional liquid detergent.

EXAMPLES

The invention will now be illustrated by the following non-limiting examples. In the examples all percentages are expressed by weight.

Comparative Examples are designated by letters, while Examples of the invention are designated by numbers.

**Preparation of Polymers**

**Functionalisation of DAB(PA)$_{16}$ with Pyroglutamate (DCC Method)**

L-Pyroglutamic Acid (6.46g,0.050mol) is dissolved in DMF(25mls), to this solution is added 1,3-dicyclohexylcarbodiimide (10.32g, 0.050mol) in dimethylformamide (25mls) at room temp. The reaction mixture is stirred for 2 hours at room temp then filtered.The filtrate is added slowly and dropwise to the DAB (PA)$_{16}$ (5g,0.003mol) then stirred vigorously for 24 hours at room temp. All solvents are removed using a rotary evaporator yielding a white gelatinous solid, after continual trituration with ether, extraction and finally filtration a white homogeneous free- flowing solid is obtained (isolated yield = 87% ) which is fully functionalised.

**FT-IR Data,** n = 3271,2929,2855,1652(amide), 1550,1448cm$^{-1}$

**Mass Spectroscopy**

Target Molecule (Mwt = 3465)

$1732.2 = 3462$ $M^{2+}$ (X2)

$1155.3 = 3463$ $M^{3+}$ (X3)

$866.7 = 3463$ $M^{4+}$ (X4)

$693.9 = 3465$ $M^{5+}$ (X5)

Average = 3463.2 Dalton (Consistent with Pyr DAB(PA)16)

| $^1$H NMR(D$_6$-DMSO) | d (PPM) |
|---|---|
| | 1.27 DAB |
| | 1.52 DAB |
| | 1.70 DAB |
| | 2.33 Pyr |
| | 4.00 Pyr |
| | 8.00 Pyr |

| $^{13}$C NMR(D$_6$-DMSO) | d (ppm) |
|---|---|
| | 25 Pyr |
| | 29 Pyr |
| | 32 DAB |
| | 51 DAB |
| | 55 Pyr |
| | 172 Pyr |
| | 177 Pyr |

**Functionalisation of DAB(PA)$_{16}$ with Pyroglutamate (Acid chloride method)**

Pyroglutamoyl chloride was prepared according to a literature reported method [B Rigo et al, Synth. Commun. 1994, **24** (18), 2597] and also by using oxalyl chloride as follows: L-Pyroglutamic acid (19.37g, 0.15 mol) and oxalyl chloride (83g of a 2M solution in dichloromethane (DCM), 0.165 mol, 10% excess) were placed into a 250 ml one necked round bottomed flask equipped with a condenser, drying tube (calcium chloride) and a stirrer bar. The dispersion was then heated to reflux in an oil bath. After 1 hour refluxing the reaction mixture remained heterogeneous, therefore dimethylformamide (DMF, 1 ml ) was added in an attempt to aid solubilisation. Addition of DMF caused vigourous refluxing for a few seconds and solubilisation of the reaction mixture. The reaction mixture was refluxed for a further 30 minutes allowed to cool and the DCM removed under reduced pressure to yield 22g of a viscous brown oil. FT-IR peak at 1765 cm$^{-1}$ indicates the formation of acid chloride. The pyroglutamoyl chloride was added slowly from a dropping funnel to a vigorously stirred aqueous sodium hydroxide (2N) solution of DAB (PA)$_{16}$ at 5 °C. After work-up it gave pyroglutamate derivative of the dendrimer. FT-IR peak at 1640 cm$^{-1}$ due to the formation of amide bond.

**Functionalisation of dendrimers/hyperbranched polymers with Imidazole containing ligands**

This type of functionalisation was carried out using either 4-imidazole acetic acid or 4-imidazole carboxylic acid as above.

**Functionalisation of "Polyol" Dendrimer with Pyroglutamate (DCC Method)**

The functionalisation was carried out according to example 1, using "Polyol" (5g,0.001mol), DCC (13.62g,0.066mol) and pyroglutamic acid (8.52g,0.066m) and working it up as above. Infra-Red:- C=O Stretch at 1731 corresponding to ester bond formation (C=O of "Polyol" = 1721).

**Functionalisation of "Polyol" Dendrimer with Pyroglutamate (Direct Method)**

Polyol (5g,0.001mol) is dissolved in DMF (40mls) and added to Pyroglutamic acid(8.52g,0.066mol) in 40mls DMF.p-Toluenesulphonic acid catalyst (13.88,0.073mol) is added (0.1m excess) and the reaction heated up to 7 °C. Monitoring of reaction shows ester formation (1731 C=O Stretch). Purification was carried out by removal of solvent and neutralisation with bicarbonate.

**Functionalisation of with Pyroglutamate (DCC Method)**

L-Pyroglutamic Acid (5.94,0.046 mol) is dissolved in DMF(25 mls), to this solution is added 1,3-dicyclohexylcarbodiimide (9.49g, 0.046 mol) in dimethylformamide (25 mls) at room temp. The reaction mixture is stirred for 2 hours at room temp then filtered.The filtrate is added slowly and dropwise to the DAB (PA)$_{32}$ (5g, 0.0014 mol) then stirred vigorously for 24 hours at room temp. All solvents are removed using a rotary evaporator yielding a white gelatinous solid, after continual trituration with ether, extraction and finally filtration a white homogeneous free- flowing solid is obtained (isolated yield ~80% ) which had required spectral characteristics of the pyroglutamate functionalised material.

**Functionalisation of DAB(PA)$_8$ with Pyroglutamate (DCC Method)**

L-Pyroglutamic Acid (6.80,0.053 mol) is dissolved in DMF(25 mls), to this solution is added 1,3-dicyclohexylcarbodiimide (10.94g, 0.053 mol) in dimethylformamide (25 mls) at room temp. The reaction mixture is stirred for 2 hours at room temp then filtered.The filtrate is added slowly and dropwise to the DAB (PA)$_8$ (5g, 0.006 mol) then stirred vigorously for 24 hours at room temp. All solvents are removed using a rotary evaporator yielding a white gelatinous solid, after continual trituration with ether, extraction and finally filtration a white homogeneous free- flowing solid is obtained (isolated yield = ~80% ) which had required spectral characteristics of the pyroglutamate functionalised material.

**Functionalisation of DAB(PA)$_8$ with Pentyl Nicotinate N-oxide**

Dendrimer DAB(PA)$_8$ (1.69g, 0.001 mol) was placed together with C5 Nicotinate N-oxide, the mixture was heated to 150 °C in a micro distillation unit. Any pentanol formed was collected off until the reaction had finished. The orange gel-like solid was collected and freeze dried (isolated yield ~60%). The solid materila had required spectral characteristics of the nicotinate N-oxide functionalised material.

**Pyroglutamate Functionalised Wedge.**

A dendritic wedge which was a quarter of the generation 4 was prepared by usual sequences of Michael additions followed by reductions and functionalised with pyroglutamate as for **DAB(PA)$_{32}$**.

**Measurement of Colour Transfer**

88 ml of wash solution was prepared using demineralised water, containing 1ml of 1$\mu$M of dye, 10 mls of 10g/L of nonionic surfactant/sodium tripolyphosphate **(Please give exact amount)and sodium bicarbonate** were added. 43.5 mg/l of polymer was then dissolved in the wash solution. To this wash solution a white cotton swatch (2.5g, 13 X 13 cm white desized mercerised cotton sheeting) was added. The fabrics were agitated in the wash solution for 30 minutes. The fabrics were rinsed in Wirral water twice, spun dried, then tumble dried. The reflectance values of the dry clothes were measured on an ICS Texicon Spectraflash 500 (Trademark) spectrophotometer.

The data thereby obtained was transferred to the CIELAB L*a*b* colour space parameters. In this colour space, L* indicates lightness and a* and b* are the chromaticity coordinates.

The colour differences between the washed swatch and a untreated white swatch was expressed as $\Delta E$, calculated from the following equation:

$$(\Delta E) = \sqrt{(\Delta L)^2 + (\Delta a)^2 + (\Delta b)^2}$$

The colour difference ($\Delta E$) obtained by the above method was calculated using the Flash 500 programme and are given below.

As stated above the polymer level remained constant in all the Examples.

In all the experiments the nonionic surfactant used was a 50:50 mixture $C_{12}$-$C_{15}$ nonionic surfactant with an average of 3 ethoxy groups per mole of alcohol (Synperonic A3 Trade Mark ex Shell) and a $C_{12}$-$C_{15}$ nonionic surfactant with an average of 7 ethoxy groups per mole of alcohol (Synperonic A7 ex Shell).

Table 1

| Example | Polymer | $\Delta E$ Value dye direct red 80 |
|---------|---------|-----------------------------------|
| A | No Polymer | 41.58 |
| B | DAB(PA)$_8$ | 41.50 |
| C | DAB(PA)$_{32}$ | 32.70 |
| D | DAB(PA)$_{64}$ | 24.35 |
| 1 | PYR.DAB(PA)$_{16}$ | 6.41 |
| 2 | PYR.DAB(PA)$_{64}$ | 9.60 |
| 3 | DAB(PA)$_{16}$nicotinate | 35.96 |

Table 1 (continued)

| Example | Polymer | ΔE Value dye direct red 80 |
|---|---|---|
| 4 | PYR. functionalised wedge | 33.82 |

NB. A lower ΔE indicates a lesser degree of colour transfer from the water to the cloth, therefore a low value is desirable.

**Claims**

1. A hyperbranched polymer partially or fully functionalised with dye binding ligands or combination of ligands.

2. A hyperbranched polymer according to claim 1 which has a dentritic nature.

3. A hyperbranched polymer according to claim 1 or claim 2 in which the dye binding ligand or ligands are on the periphery of the molecule.

4. A hyperbranched polymer according to any preceding claim which has a three dimensional shape conforming to that of a Kite, a knot or a barbell.

5. A hyperbranched polymer according to any preceding claim in which the dye binding ligands comprise a nitrogen containing heterocycle.

6. A hyperbranched polymer according to claim 5 in which the dye binding ligand is imidazole, pyridine-N-oxide, pyrrolidone, pyroglutamate, pyrolidone oxide nicotinic acid N-oxide and mixtures thereof.

7. A hyperbranched polymer according to claim 6 in which the dye binding ligand is pyroglutamate.

8. A hyperbranched polymer according to any preceding claim in which the degree of substitution of the free end groups of said polymer by dye binding polymers is from 20 to 70%.

9. Use of a hyperbranched polymer according to any preceding claim to mitigate dye transfer.

10. A detergent composition comprising the hyperbranched polymer according to any one of claims 1 to 8 and a surfactant.

11. A detergent composition according to claim 10 in which the surfactant is a nonionic surfactant.

European Patent
Office

**EUROPEAN SEARCH REPORT**

Application Number

EP 97 30 2964

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | US 5 376 690 A (NEWKOME GEORGE R ET AL) 27 December 1994 * claims 1,4 * * column 7, line 7 - line 18 * | 1 | C08G83/00 C11D3/00 |
| A | EP 0 684 044 A (DSM NV) 29 November 1995 * claims 1,10 * | 1 | |
| D,E | EP 0 779 358 A (UNILEVER PLC ;UNILEVER NV (NL)) 18 June 1997 * claims 1,5,7,11 * | 1 | |
| E | DE 197 03 718 A (INST CHEMO UND BIOSENSORIK MUE) 24 July 1997 * claims 1,3 * | 1 | |

| | TECHNICAL FIELDS SEARCHED (Int.Cl.6) |
|---|---|
| | C08G C11D C08D |

The present search report has been drawn up for all claims

| Place of search | Date of completion of the search | Examiner |
|---|---|---|
| THE HAGUE | 2 October 1997 | Niaounakis, M |

EPO FORM 1503 03.82 (P04C01)